# EUROPEAN PATENT APPLICATION

(11) **EP 4 572 257 A1**
(43) Date of publication of application: **18.06.2025**
(21) Application number: 22954490.3
(22) Date of filing: 11.08.2022
(51) Int. Cl.: H04L 27/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/111725
(87) International publication number: WO 2024/031523

(57) **Abstract**

Embodiments of the present disclosure provide an information processing method and apparatus, a communication device, and a storage medium. The information processing method executed by a first UE may comprise: sending a request message to a network device, wherein the request message at least comprises an RSC; and receiving a response message returned by the network device on the basis of the request message, wherein the first UE has a relay service permission indicated by the RSC, and the response message comprises a security parameter for UE-to-UE relay discovery.

## Description

### TECHNICAL FIELD

The present disclosure relates to, but is not limited to, the wireless communication technical field, and in particular to an information processing method and apparatus, a communication device and a storage medium.

### BACKGROUND

Proximity services (ProSe) allow User Equipment (UE) to discover each other through a UE to UE (U2U) relay (i.e., a relay device). That is, if a source UE cannot communicate directly with a target UE, it can communicate with the target UE by discovering a U2U relay. This procedure may trigger a discovery procedure between UEs. However, the U2U relay actually acts as an untrusted communication node, which may lead to Man-In-the-middle-attacks (MIMT).

### SUMMARY

Embodiments of the present disclosure provide an information processing method and apparatus, a communication device, and a storage medium.

A first aspect of an embodiment of the present disclosure provides an information processing method. The method is performed by a first UE. The method includes:
sending a request message to a network device, wherein the request message at least includes a Relay Service Code (RSC); and
receiving a response message which is returned by the network device based on the request message, wherein the first UE is authorized for a relay service indicated by the RSC, and the response message includes a security parameter for UE-to-UE relay discovery.

A second aspect of an embodiment of the present disclosure provides an information processing method. The method is performed by a network device. The method includes:
receiving a request message from a first UE, wherein the request message at least includes a Relay Service Code (RSC);
sending a response message to the first UE according to the RSC, wherein the first UE is authorized for a relay service indicated by the RSC, and the response message includes a security parameter for UE-to-UE relay discovery.

A third aspect of an embodiment of the present disclosure provides an information processing apparatus. The apparatus includes:
a first sending module configured to send a request message to a network device, wherein the request message at least includes a Relay Service Code (RSC); and
a first receiving module configured to receive a response message which is returned by the network device based on the request message, wherein the first UE is authorized for a relay service indicated by the RSC, and the response message includes a security parameter for UE-to-UE relay discovery.

A fourth aspect of an embodiment of the present disclosure provides an information processing apparatus, which is performed by a network device, and includes:
a second receiving module configured to receive a request message from a first UE, wherein the request message at least includes a Relay Service Code (RSC);
a second sending module configured to send a response message to the first UE according to the RSC, wherein the first UE is authorized for a relay service indicated by the RSC, and the response message includes a security parameter for UE-to-UE relay discovery.

A fifth aspect of an embodiment of the present disclosure provides a communication device, including a processor, a transceiver, a memory, and an executable program stored in the memory and capable of being run by the processor. When the executable program is run by the processor, the information processing method provided in the first aspect or the second aspect is implemented.

A sixth aspect of an embodiment of the present disclosure provides a computer storage medium, which stores an executable program. When the executable program is executed by a processor, the information processing method provided in the first aspect or the second aspect can be implemented.

According to the technical solutions provided by the embodiments of the present disclosure, the first UE obtains the security parameter from the network device. The security parameter can be used for a source UE and a target UE to establish relay links with the relay UE respectively, thereby reducing the problem such as MIMT attack caused by the relay UE being an untrusted node during the U2U relay communication. Thus, the security of the U2U relay communication can be improved.

It should be understood that the foregoing general description and the following detailed description are illustrative and explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the embodiments of the present disclosure.
FIG. 1 is a schematic structural diagram of a wireless communication system according to an example embodiment;
FIG. 2 is a schematic flowchart of an information processing method according to an example embodiment;
FIG. 3A is a schematic flowchart of an information processing method according to an example embodiment;
FIG. 3B is a schematic flowchart of an information processing method according to an example embodiment;
FIG. 4 is a schematic flowchart of an information processing method according to an example embodiment;
FIG. 5 is a schematic flowchart of an information processing method according to an example embodiment;
FIG. 6 is a schematic flowchart of an information processing method according to an example embodiment;
FIG. 7 is a schematic flowchart of an information processing method according to an example embodiment;
FIG. 8 is a schematic flowchart of an information processing method according to an example embodiment;
FIG. 9 is a schematic flowchart of an information processing method according to an example embodiment.
FIG. 10 is a schematic diagram of a structure of an information processing apparatus according to an example embodiment;
FIG. 11 is a schematic diagram of a structure of an information processing apparatus according to an example embodiment;
FIG. 12 is a schematic diagram of a structure of a UE according to an example embodiment;
FIG. 13 is a schematic diagram of a structure of a network device according to an example embodiment.

### DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with embodiments of the invention. Rather, they are merely examples of apparatuses and methods consistent with some aspects of embodiments of the present disclosure.

The terms used in embodiments of the present disclosure are for the purpose of describing example embodiments only and are not intended to limit the embodiments of the present disclosure. As used in the present disclosure, the singular forms "a/an", "said" and "the" are intended to include a plural form as well, unless the context clearly dictates otherwise. It will also be understood that the term "and/or" as used herein refers to and includes any and all possible combinations of one or more of associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, first information may also be called second information, and similarly, second information may also be called first information. Depending on the context, the word "if" as used herein may be interpreted as "when" or "in a case where..." or "in response to determining...".

It should be noted that, for the same parameter(s)/noun(s), unless otherwise stated, it(they) has(have) the same meanings in different embodiments, and therefore is(are) not separately described in each embodiment.

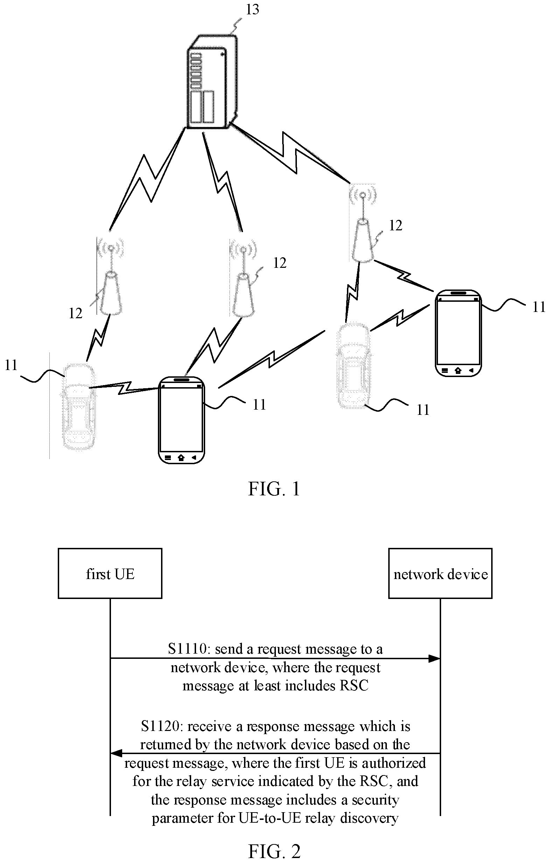

FIG. 1 shows a schematic structural diagram of a wireless communication system provided by an embodiment of the present disclosure. As shown in FIG. 1, the wireless communication system is a communication system based on cellular mobile communication technologies. The wireless communication system may include multiple UEs 11 and multiple access devices 12.

A UE 110 may be a device that provides voice and/or data connectivity to a user. The UE 11 may communicate with one or more core networks via a Radio Access Network (RAN). The UE 11 may be an Internet of Things UE, such as a sensor device, a mobile phone (or referred to as a cellular phone), and a computer with Internet of Things UE, for example, it can be a fixed, portable, pocket-sized, handheld, computer-built-in or vehicle-mounted device. For example, the UE 11 may be a station (STA), a subscriber unit, a subscriber station, a mobile station, a mobile, a remote station, an access point, remote UE (remote terminal), access UE (access terminal), a user terminal, a user agent, a user device, or user equipment (UE). Alternatively, the UE 11 may be equipment of an unmanned aerial vehicle. Alternatively, the UE 11 may be a vehicle-mounted device, for example, it may be an on-board computer with a wireless communication function, or wireless communication device connected to an external on-board computer. Alternatively, the UE 11 may be a roadside device, for example, it may be a streetlight, a signal light or other roadside device with a wireless communication function.

An access device 12 may be a network side device in a wireless communication system. The wireless communication system may be the 4th generation mobile communication (4G) system, also known as the Long Term Evolution (LTE) system; or, the wireless communication system may be a 5G system, also called new radio (NR) system or 5G NR system. Alternatively, the wireless communication system may be a next-generation system of the 5G system. The access network in the 5G system may be called New Generation-Radio Access Network (NG-RAN), or a MTC system.

The access device 12 may be an evolved access device (eNB) used in the 4G system. Alternatively, the access device 12 may be an access device (gNB) using a centralized distributed architecture in the 5G system. When the access device 12 adopts a centralized distributed architecture, it usually includes a central unit (CU) and at least two distributed units (DU). The central unit is provided with a protocol stack including a Packet Data Convergence Protocol (PDCP) layer, a Radio Link Control protocol (RLC) layer, and a Media Access Control (MAC) layer; a distributed unit is provided with a physical (PHY) layer protocol stack. The embodiments of the present disclosure do not limit the specific implementation of the access device 12.

A wireless connection may be established between an access device 12 and a UE 11 through a radio air interface. In different implementations, the radio air interface is a radio air interface based on the fourth generation mobile communication network technology (4G) standard; or, the radio air interface is a radio air interface based on the fifth generation mobile communication network technology (5G) standard, for example, the radio air interface is a new air interface; alternatively, the radio air interface may be a radio air interface based on the next generation mobile communication network technology standard of 5G.

As shown in FIG. 2, an embodiment of the present disclosure provides an information processing method. The method is performed by a first UE. The method includes:

In S1110, a request message is sent to a network device. The request message at least includes: a Relay Service Code (RSC). As an example, the RSC is used to identify a relay service.

In S1120, a response message which is returned by the network device based on the request message is received. The first UE is authorized for the relay service indicated by the RSC, and the response message includes a security parameter for UE-to-UE relay discovery.

As an example, the request message is used to request, from the network device, the security parameter for establishing a UE-to-UE relay communication and/or to authenticate whether the first UE is authorized for the relay service indicated by the RSC carried in the request message. The relay UE can establish links with a source UE and a target UE respectively to realize a UE-to-UE relay communication between the source UE and the target UE as a relay. Also, as an example, if the response message includes the security parameter, the response message is used to indicate that UE-to-UE relay communication is allowed to be established.

The first UE may be a source UE, a target UE or a relay UE that performs communication based on a PC5 interface or based on an SR5 interface. The relay UE here is a relay device for a U2U communication between the source UE and the target UE. The relay UE can establish links with the source UE and the target UE respectively to realize a UE-to-UE relay communication between the source UE and the target UE as a relay.

In some embodiments, the source UE, the target UE, and the relay UE may be connected to the same network device that can provide security parameter(s), or may be connected to different network devices that can provide security parameter(s).

As an example, in an embodiment of the present disclosure, the first UE may send a request message to a network device, and the network device may be any network device that can configure security parameter(s) for the first UE. As an example, the network device may be a core network device. The core network device includes, but is not limited to, at least one of the following: Direct Discovery Name Management Function (DDNMF) and/or ProSe Key Management Function (PKMF), etc. That is, core network device such as DDNMF and/or PKMF provides security parameter(s) for U2U relay discovery, thereby reducing the security risk of discovering an untrusted U2U relay and using the U2U relay for relay communication, and improving the security of the U2U relay communication.

As another example, the request message may be various message(s) that can be sent by a UE to a network device, including but not limited to a Relay Discovery Key Request message. Correspondingly, the response message in this case may include: a Relay Discovery Key Response message.

In an implementation of the embodiment of the present disclosure, the first UE sends a request message to a network device. The request message includes at least: a Relay Service Code (RSC). The RSC is used to identify a relay service. The first UE receives a response message which is returned by the network device based on the request message. The response message may include: an accept message. The accept message indicates that the first UE has a service authority for the relay service indicated by the RSC, and the response message in this case may include a security parameter for U2U relay discovery. It should be noted that this implementation may be implemented by the first UE alone, or may be implemented in combination with other embodiments or implementations.

In another implementation of the embodiment of the present disclosure, the first UE sends a request message to a network device. The request message includes at least: a Relay Service Code (RSC). The RSC is used to identify a relay service. The first UE receives a response message which is returned by the network device based on the request message. The response message may include: a reject message. The reject message indicates that the first UE does not have the service authority for the relay service indicated by the RSC, and the response message in this case does not carry the security parameter for the U2U relay discovery. It should be noted that this implementation can be implemented by the first UE alone, or it can be implemented in combination with other embodiments or implementation s.

The RSCs for different relay services are different. Security parameter(s) is(are) related to a RSC. Thus, for a UE supporting the relay service indicated by the same RSC, the security parameter(s) returned by the network device can be the same.

As an example, the security parameter(s) may include any parameter(s) such as authorization and/or key parameter(s) for U2U relay discovery. In short, these parameters may be used for subsequent authority and/or security check for U2U relay discovery.

After receiving the security parameter(s), mutual discovery between UEs may use a mode A or a mode B.

If the mode A is adopted, after security check is passed, a relay link establishment stage or procedure can be entered through an announcement message, and finally a direct link communication between the source UE and the target UE can be established based on the relay UE.

If the mode B is adopted, security check needs to be realized through the interaction of a request message and a response message; after the security check is passed, the relay link establishment stage or procedure is entered, and finally a direct link communication between the source UE and the target UE is established based on the relay UE.

As an example, if the first UE is the source UE or the target UE, the request message may further include: an identity of an optional relay UE for the source UE and/or the target UE.

The identity of the optional relay UE includes but is not limited to: a restricted proximity service application user identity (Restricted Prose Application User identity, RPAUID).

The ID of the optional relay UE includes but is not limited to the restricted proximity service application user identity (Restricted Prose Application User identity, RPAUID) of the optional relay UE. Of course, the ID of the optional relay UE may also be other forms of ID.

As an example, the source UE and the target UE can obtain the ID of the optional relay UE from an application layer before performing U2U relay discovery. Based on the ID of the optional relay UE, the source UE and the target UE may send a request message including the ID of the optional relay UE to the network device, and the network device provides corresponding security parameter(s).

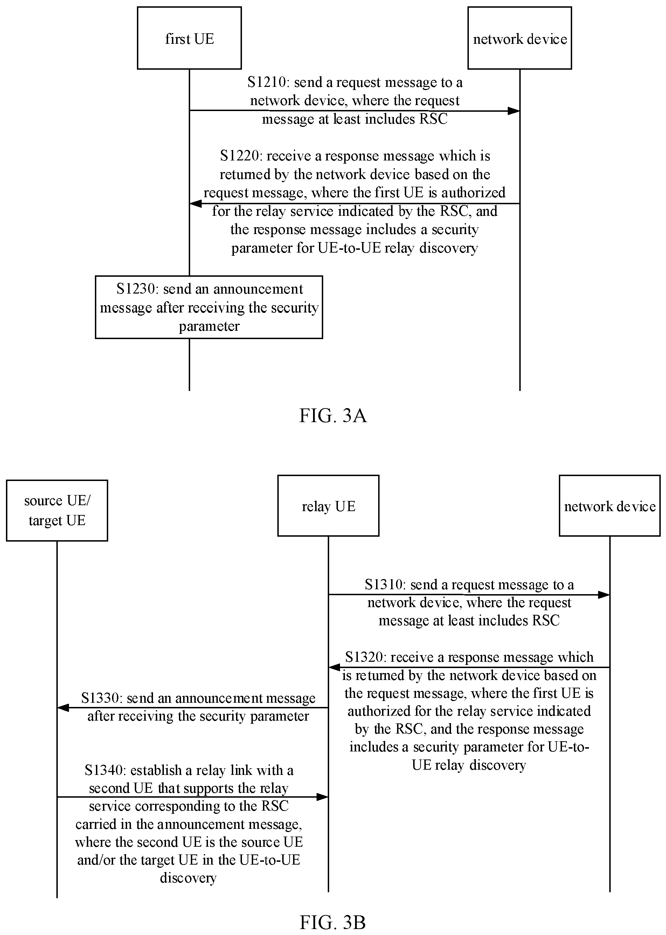

As shown in FIG. 3A, an embodiment of the present disclosure provides an information processing method. The method is performed by a first UE and the first UE is a relay UE. The method includes:

In S1210, a request message is sent to a network device. The request message includes at least: RSC.

In S1220, a response message which is returned by the network device based on the request message is received. The first UE has is authorized for the relay service indicated by the RSC, and the response message includes a security parameter for UE-to-UE relay discovery.

In S1230, an announcement message is sent after receiving the security parameter.

The request message is used to request to the network device to act as a relay UE. The relay UE can establish links with the source UE and the target UE respectively to realize a UE-to-UE relay communication between the source UE and the target UE as a relay. The response message is used to indicate that the relay UE is allowed to act as a relay, and the response message includes the security parameter for UE-to-UE relay discovery.

If the first UE successfully receives the security parameter, it means that the first UE is authorized to provide the relay service for the relay service indicated by the RSC. If the mode A is used to implement mutual discovery and security check between UEs based on PC5 or SR5, the relay UE (i.e., U2U relay) can send an announcement message.

Of course, when the mode A is used, the announcement message may also be sent by the source UE and then the relay UE forwards the announcement message. However, since the relay UE is located between the source UE and the relay UE, the announcement message broadcast by the relay UE can be listened to by both the source UE and the target UE, thus shortening the procedure of mutual discovery and security check between UEs and shortening the procedure of establishing a direct link.

As an example, if the first UE is locally configured with a security policy, and if the security policy indicates that security check is required for the relay service indicated by the RSC, S1230 may include: performing security processing on the announcement message using the security parameter, and broadcasting the announcement message after the security processing using the security parameter on a broadcast channel.

As another example, if the first UE is locally configured with a security policy, and if the security policy indicates that security check is not required for the relay service indicated by the RSC, S1230 may include: broadcasting on the broadcast channel the announcement message for which security processing is not performed using the security parameter.

As an example, performing security processing on the announcement message using the security parameter may include:

according to the security policy, performing integrity protection on the announcement message using the security parameter to obtain an integrity-protected announcement message; or

according to the security policy, performing confidentiality protection on the announcement message using the security parameter to obtain a confidentiality-protected announcement message; or

according to the security policy, performing confidentiality protection and integrity protection on the announcement message to obtain a confidentiality-protected and integrity-protected announcement message.

After the relay UE broadcasts the announcement message, the announcement message may be successfully monitored by UE(s) around the relay UE, or the announcement message may not be monitored by the UE(s) around the relay UE, and therefore the UE(s) around the relay UE may monitor request(s) from other UE(s) to establish relay link(s).

In some embodiments, as shown in FIG. 3B, an embodiment of the present disclosure provides an information processing method. The method is performed by a first UE and the first UE is a relay UE, and the method includes:

In S1310, a request message is sent to a network device. The request message at least includes: RSC.

In S1320, a response message which is returned by the network device based on the request message is received. The first UE is authorized for the relay service indicated by the RSC, and the response message includes a security parameter for UE-to-UE relay discovery.

In S1330, an announcement message is sent after receiving the security parameter. The announcement message includes the RSC.

In S1340, a relay link is established with a second UE that supports the relay service corresponding to the RSC carried in the announcement message. The second UE is the source UE and/or target UE in the UE-to-UE relay communication.

In some embodiments, the announcement message carries the RSC, and thus the announcement message is successfully monitored by the second UE and the second UE successfully extracts the RSC in the announcement message. If the second UE supports the relay service corresponding to the RSC included in the announcement message, the second UE may initiate to the relay UE a request message for establishing a relay link. For example, the request message for establishing a relay link may include a direct communication request (DCR). Accordingly, the procedure of establishing the relay link is entered.

The second UE here may be the source UE and the target UE.

If security processing is performed on the announcement message using the security parameter, since the same RSC corresponds to the same security parameter, both the source UE and the target UE can successfully perform security check, thereby successfully extracting the RSC from the announcement message.

The security check here may include: integrity check and/or confidentiality check.

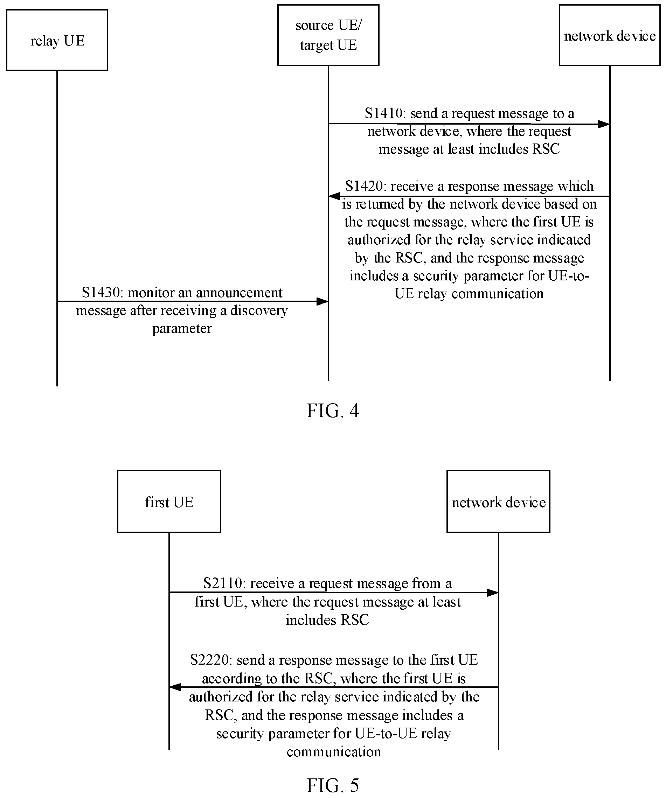

If the mode A is used for mutual discovery and security check between UEs, as shown in FIG. 4, an embodiment of the present disclosure provides an information processing method. The method is performed by a first UE, and the first UE is a source UE or a target UE. The method includes:

In S1410, a request message is sent to a network device. The request message at least includes: RSC.

In S1420, a response message which is returned by the network device based on the request message is received. The first UE is authorized for the relay service indicated by the RSC, and the response message includes a security parameter for UE-to-UE relay discovery.

In S1430, after receiving the discovery parameter, monitoring of an announcement message is performed.

After receiving the security parameter, the source UE and/or target UE determines that they are authorized to use the relay service provided by the RSC, and therefore, the source UE and/or target UE monitors the announcement message after receiving the discovery parameter.

As an example, if the announcement message is an integrity-protected message, or a confidentiality-protected message, or an integrity-protected and confidentiality-protected message, after the source UE and the target UE receive the announcement message, they use the security parameter to perform integrity check and/or confidentiality check on the announcement message, thereby completing the security check of the announcement message.

After the announcement message passes the security check, whether to establish a relay link with the relay UE that sends the announcement message is determined.

In some embodiments, the announcement message includes the RSC, and the method further includes:

if the first UE supports the relay service indicated by the RSC in the monitored announcement message, determining whether to establish a relay link with the second UE that sends the announcement message.

As an example, the announcement message is a plain text message, that is, the announcement message is not integrity-protected and is not confidentiality-protected, and thus the first UE can directly extract the RSC from the plain text announcement message. If the relay service indicated by the RSC extracted by the first UE from the announcement message is a relay service supported by the first UE, the first UE can further determine whether to respond to the announcement message to establish a relay link with the second UE.

In some other embodiments, the method further includes:
after receiving the announcement message, performing security check on the announcement message using the security parameter;
determining whether to establish a relay link with the second UE that sends the announcement message if the first UE supports the relay service indicated by the RSC in the monitored announcement message, includes:
if the first UE supports the relay service indicated by the RSC in the monitored announcement message and the announcement message passes the security check, determining whether to establish the relay link with the second UE that sends the announcement message.

In another example embodiment, the announcement message is an integrity-protected message or an integrity-protected and confidentiality-protected message, and after completing security check using the discovery parameter, the first UE can directly extract the RSC from the announcement message. If the relay service indicated by the RSC extracted by the first UE from the announcement message is a relay service supported by the first UE, the first UE can further determine whether to respond to the announcement message to establish a relay link with the second UE.

That is, the security check includes: integrity check, or confidentiality check, or integrity check and confidentiality check.

In some embodiments, the announcement message includes at least one of the following:
information of a type of discovery;
the RSC;
an ID of an optional source UE and/or an optional target UE.

The ID of the optional source UE and/or the optional target UE is used for a UE by which the announcement message is monitored to determine whether to establish a relay link with a relay UE that sends the announcement message.

The ID of the optional source UE here may be the RPAUID of the optional source UE, and/or the ID of the source optional target UE may be the RPAUID of the optional target UE. The ID of the optional source UE and/or the optional target UE carried in the announcement message sent by the relay UE may be: the ID of a UE that has been discovered or a UE which the relay UE has communicated with before the relay UE performs the current discovery between UEs.

The information of the type of discovery indicates the type of discovery. As an example, the type of discovery may include: U2U discovery and/or U2N discovery, etc.

In an embodiment of the present disclosure, the information of the type of discovery carried by the announcement message indicates U2U discovery.

If the first UE is a relay UE, in some embodiments, the first UE is a relay UE, and the request message further includes: an ID of the relay UE; or
the first UE is the source UE or the target UE; the request message includes the ID of the first UE; or, the request message includes the ID of the first UE and the ID of an optional relay UE.

The ID here includes but is not limited to RPAUID.

As shown in FIG. 5, an embodiment of the present disclosure provides an information processing method. The method is performed by a network device. The method includes:

In S2110, a request message is received from a first UE. The request message at least includes: RSC.

In S2220, a response message is sent to the first UE according to the RSC; the first UE is authorized for a relay service indicated by the RSC, and the response message includes a security parameter for UE-to-UE relay discovery; and/or
a response message is sent to the first UE according to the RSC, wherein the first UE is not authorized for the relay service indicated by the RSC, the response message rejects the request, and the response message does not include the security parameter for UE-to-UE relay discovery.

The network device may be any network device that can configure the security parameter for the first UE. As an example, the network device may be a core network device. The core network device includes but is not limited to at least one of the following: Direct Discovery Name Management Function (DDNMF) and/or 5G ProSe Key Management Function (PKMF), etc. That is, the core network device such as DDNMF and/or PKMF provides security parameter(s) for U2U relay discovery, thereby reducing the security risk of U2U relay communication and improving the security of U2U relay communication.

The first UE may be a source UE, a target UE or a relay UE that performs communications based on a PC5 interface or a SR5 interface. The relay UE here refers to a UE-to -UE relay device between the source UE and the target UE.

The request message may be various message(s) that can be sent by a UE to a network device, and the request message includes but is not limited to a Relay Discovery Key Request message. Correspondingly, the response message in this case may include: a Relay Discovery Key Response message.

RSCs for different relay services are different. Security parameter(s) is(are) related to a RSC. Thus, for a UE supporting a relay service indicated by the same RSC, the security parameter(s) returned by the network device can be the same.

As an example, the security parameter(s) may include any parameter(s) such as authorization and/or key parameter(s) used for U2U relay discovery.

After the security parameter(s) is(are) returned to the first UE, the security parameter(s) can be used by the first UE to complete relay discovery between the source UE and the relay UE and the target UE and the relay UE respectively based on the mode A and/or the mode B.

In some embodiments, the request message further includes: an ID of the first UE;
the method further includes:
determining, according to the ID of the first UE, whether the first UE is authorized to perform UE-to-UE relay communication;
sending the response message to the first UE according to the RSC includes:
when the first UE is authorized to perform UE-to-UE relay communication, sending the response message to the first UE according to the RSC.

The ID of the first UE may include but is not limited to a restricted proximity service application user identity (Restricted Prose Application User Identity, RPAUID) of the first UE.

As an example, determining whether the first UE is authorized to perform UE-to-UE relay communication according to the ID of the first UE may include: if the first UE is a relay UE, determining whether the relay UE is capable of providing a relay service according to the ID of the relay UE.

For example, the PKMF and/or DDNMF of the relay UE sends an authorization request to other network device such as an application server and receives an authorization response from other network element. The other network device here may include but is not limited to: a Prose application server, a Policy Control Function (PCF) or a Unified Data Management (UDM).

As an example, determining, according to the ID of the first UE, whether the first UE is authorized to perform the UE-to-UE relay communication may include:
if the first UE is the source UE or the target UE, determining, according to the ID of the relay UE, whether the source UE or the target UE is authorized to use the relay service indicated by the RSC carried in the request message using the relay UE.

For example, the PKMF and/or DDNMF of the source UE or the target UE sends an authorization request to other network device such as an application server and receives an authorization response from other network element. The other network device here may include but is not limited to: a Prose application server, a Policy Control Function (PCF) or a Unified Data Management (UDM).

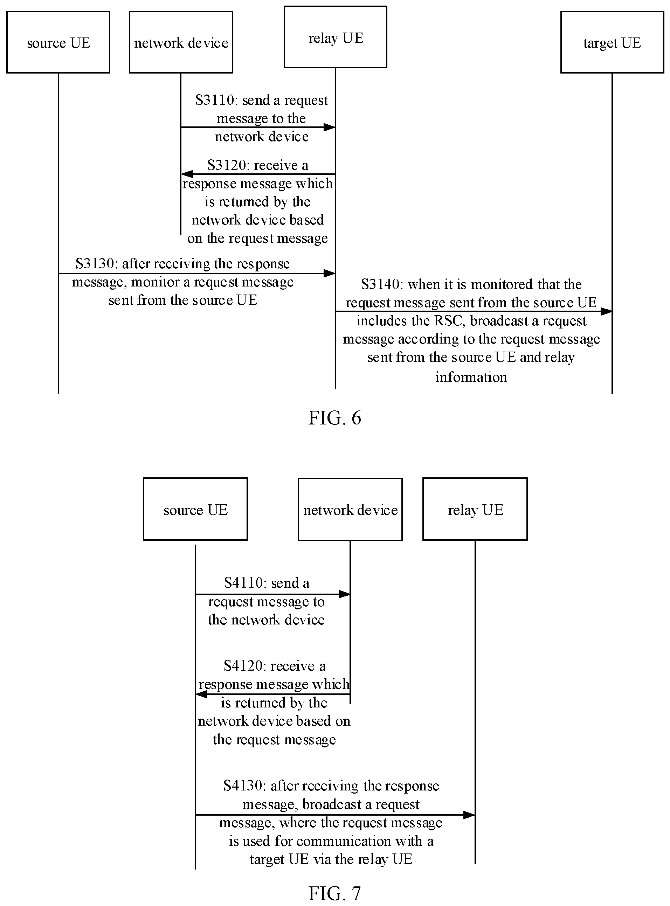

If the mode B is used to realize mutual discovery and check between the source UE and the target UE and the relay UE, as shown in FIG. 6, an embodiment of the present disclosure provides an information processing method. The method is performed by the relay UE, and the method includes:

In S3110, a request message is sent to the network device. The request message at least includes: RSC.

In S3120, a response message which is returned by the network device based on the request message is received. The relay UE is authorized to provide a relay communication for the relay service indicated by the RSC, and the response message includes: a security parameter for UE-to-UE relay discovery.

In S3130, after receiving the response message, monitoring of a request message sent by the source UE is performed. As an example, the second request message is used to request to discover the target UE.

In S3140, when it is monitored that the request message sent by the source UE includes the RSC, a request message is broadcast according to the request message sent by the source UE and relay information.

The request message broadcast by the relay UE can be used by the relay UE to continue to find the target UE.

The method further includes:
receiving a response message returned based on the target UE; and
when receiving the response message returned by the target UE, returning a response message to the source UE.

In some embodiments, when it is monitored that the second request message includes the RSC, broadcasting a third request message according to the second request message and the relay information includes:
after it is monitored that the second request message includes the RSC and the security check of the first response message using the security parameter is passed, broadcasting the third request message according to the second request message and the relay information.

The third request message is used to notify the target UE to establish a link.

In some embodiments, the request message sent by the relay UE further includes at least one of the following:
information of a type of discovery;
device information of the source UE;
device information of the target UE.

In some embodiments, the relay information includes at least one of the following:
device information of the relay UE;
a relay indication.

The relay indication can be used to indicate that the current request message is sent by the relay UE.

As shown in FIG. 7, an embodiment of the present disclosure provides an information processing method. The method is performed by a source UE. The method includes:

In S4110, a request message is sent to a network device. The request message at least includes: RSC.

In S4120, a response message which is returned by the network device based on the request message is received. The source UE is authorized for the relay service indicated by the RSC, and the response message includes: a security parameter for UE-to-UE relay discovery.

In S4130, after receiving the response message, a second request message is broadcast. The second request message is used to communicate with the target UE through the relay UE.

In the embodiment of the present disclosure, the source UE sends a request message to the network device to obtain the security parameter related to the RSC. If the source UE obtains the security parameter, the source UE considers that the source UE itself is authorized to obtain the relay service corresponding to the RSC, and when the source UE needs to obtain the relay service, the source UE broadcasts the request message on the broadcast channel, so that the source UE can communicate with the target UE through the relay UE.

In some embodiments, the method further includes:
receiving a third response message returned by the relay UE, wherein the response message from the relay UE is sent by the relay UE after the relay UE receives a response message returned by the target UE.

In some embodiments, the method further includes:
after receiving the third response message sent from the relay UE, establishing a relay link with the relay UE, wherein the relay link is used for a U2U relay communication between the source UE and the target UE.

In some embodiments, the method further includes:
after receiving the response message sent from the network device, performing security processing on the broadcast request message using the security parameter;
broadcasting the second request message includes:
broadcasting the second request message after security processing using the security parameter.

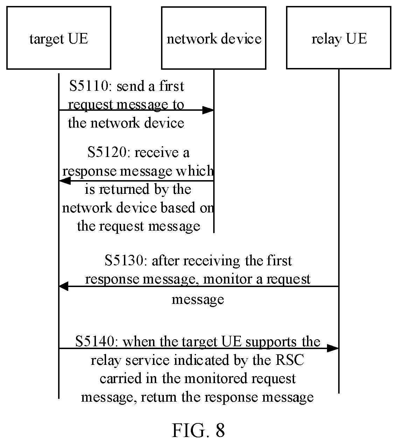

As shown in FIG. 8, an embodiment of the present disclosure provides an information processing method. The method is performed by a target UE, and the method includes:

In S5110, a first request message is sent to a network device. The request message at least includes: RSC.

In S5120, a first response message which is returned by the network device based on the request message is received. When the target UE is authorized to use the relay service indicated by the RSC, the first response message includes a security parameter for UE-to-UE relay discovery.

In S5130, a request message is monitored after receiving the first response message.

In S5140, a response message is returned when the target UE supports the relay service indicated by the RSC carried in the monitored first request message.

In some embodiments, when the target UE supports the relay service indicated by the RSC carried in the monitored request message, returning the response message includes:
when the target UE supports the relay service indicated by the RSC carried in the monitored request message and the monitored request message passes security check using the security parameter, returning the response message.

In some embodiments, the method further includes:
after sending the first response message, receiving a link establishment request from the relay UE; and
based on the link establishment request, establishing a relay link with the relay UE, wherein the relay link is used for relay communication between the target UE and the source UE.

An embodiment of the present disclosure provides an information processing method for ensuring that a source UE and a target UE securely discover each other through a UE-to-UE relay, and providing integrity and confidentiality of discovery information transmitted through a user equipment to user equipment (UE-to-UE, U2U) relay.

It is assumed that a ProSe application server allocates a Restricted ProSe Application User ID (RPAUID) for each ProSe UE and returns the RPAUID to an application client in the UE.

When the application client in the UE intends to discover other UE(s), for example, to discover UE(s) of friend accounts of the application program, the UE obtains a RPAUID list (target RPAUID list) of these users or/and a relay user ID list (relay RPAUID list) that can provide a relay service from the ProSe application server, and the UE can monitor the target UE or relay UE in the list. The target RPAUID list or/and the relay RPAUID list are delivered to the UE in an application layer container.

When using the UE relay, a RSC needs to be obtained before performing U2U relay discovery. The RSC may be pre-configured on the UE, or may be provisioned by the network device to the relay UE during the UE service authorization procedure.

The U2U relay can discover other UE(s) in proximity via the aforementioned U2U discovery or U2U communication procedure. The U2U relay may buffer the RPAUID of the UE discovered by the relay, and the RPAUID may be used as the UE ID of the discovered UE. When the buffer timer expires, the parameter(s) such as the RPAUID of the discovered UE become invalid and is(are) deleted by the U2U relay UE.

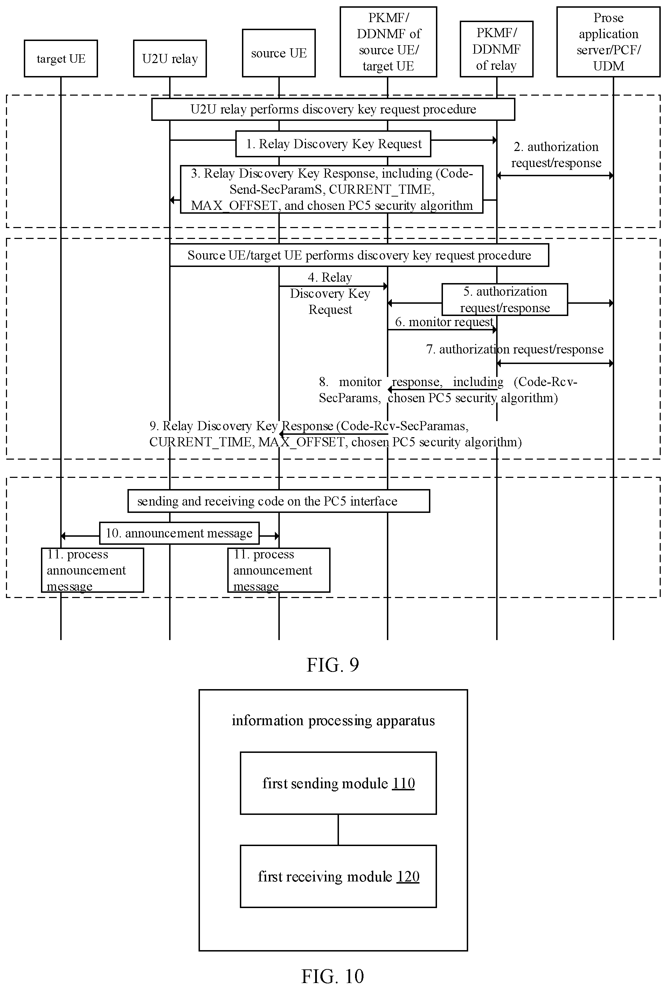

As shown in FIG. 9, an information processing method provided by an embodiment of the present disclosure may include:
Steps 1-3 refer to the relay UE. In 5G ProSe U2U relay discovery, the U2U relay plays the role of announcing UE and sends an announcement message.

In the first stage, the U2U relay performs a discovery key request procedure, which may specifically include:
1. The U2U relay sends a Relay Discovery Key Request message including a Restricted own ProSe Application User ID (RPAUID) and a Relay Service Code (RSC) to the 5G DDNMF/PKMF to obtain the associated security material. In addition, the U2U relay should provide its own PC5 UE security capability, and the Relay Discovery Key Request message further includes a list of encryption algorithms supported by the UE.
   It is worth noting that: in the user plane based on security procedure for U2U relay, the 5G PKMF is used; in the control plane based on security procedure for U2U relay, the 5G DDNMF is used.
2. The 5G DDNMF/PKMF may check for authorization with the ProSe application server /PCF/UDM.
   It is worth noting that: if the U2U relay is in a roaming state, the DDNMFs in the Home Public Land Mobile Network (HPLMN) and the Visited Public Land Mobile Network (VPLMN) of the U2U relay exchange authorization of the U2U relay.
3. The 5G DDNMF/PKMF of the U2U relay returns the security parameter(s) corresponding to the RSC, as well as CURRENT_TIME and MAX_OFFSET, and so on. The CURRENT_TIME is the current timestamp, and the MAX_OFFSET is a time offset. The timestamp and the MAX_OFFSET can ensure that the UE is protected from replay attacks by attackers. For the U2U relay, the security parameter(s) corresponding to the RSC can be: Code-Send-SecParams.

The security parameter(s) is(are) generated according to the RSC, and the security parameter(s) is(are) necessary security material in the U2U relay discovery procedure. The 5G DDNMF/PKMF of the U2U relay should include the selected PC5 security algorithm in the Relay Discovery Key Response message. The 5G DDNMF/PKMF determines the selected PC5 security algorithm according to the RSC and the received PC5 UE security capability in step 1. The U2U relay stores the RSC and the selected PC5 security algorithm together. The selected PC5 security algorithm may include the selected PC5 encryption algorithm and/or the selected PC5 integrity algorithm. The PC5 encryption algorithm is used for confidentiality protection. The selected PC5 integrity algorithm is used for PC5 integrity protection.

It is worth noting that a U2U relay supporting multiple RSCs can use multiple U2U relay discovery messages to obtain corresponding security parameter(s), and each U2U relay discovery message carries only one RSC.

It is worth noting that the code-send security parameter is associated with RSC. The U2U relay should use a corresponding code-send security parameter (Code-send-secParams) to protect/check all discovery messages under a specific U2U relay service. The code-send security parameter (Code-send-secParams) here is the security parameter for the U2U relay mentioned above.

Steps 4-9 correspond to source UE/target UE. For 5G ProSe UE-to-UE relay discovery, the source UE and target UE can play the role as the monitoring UE.

4. The source UE/target UE sends a relay key discovery request message to its own 5G DDNMF/PKMF, which contains RPAUID, RSC, PC5 UE security capability of the source UE/target UE and the RPAUID(s) of the optional relay UE(s). The PC5 UE security capability of the source UE/target UE can represent the PC5 security algorithm(s) supported by the source UE and/or target UE.

It is worth noting that: a source UE/target UE supporting multiple RSCs can use multiple Relay Discovery Key messages to obtain security parameter(s), each Relay Discovery Key message carrying one RSC. That is, to obtain security parameters for services indicated by different RSCs, different request messages such as Relay Discovery Key messages are used.

5. The 5G DDNMF/PKMF of the source/target UE sends an authorization request to the ProSe application server/ PCF/UDM. If the source UE/target UE is allowed to monitor the announcement messages under this specific U2U relay service, the ProSe application server/PCF/UDM returns an authorization response.

6. If the discovery request is authorized and the PLMN ID in the relay RPAUID(s) indicates a different PLMN, the 5G DDNMF/PKMF of the source UE/target UE contacts the 5G DDNMF/PKMF of the indicated PLMN (i.e. the 5G DDNMF of the U2U relay) by sending a monitor request including the PC5 UE security capability received in step 4.

It is worth noting that: if the relay RPAUID(s) belong to multiple different PLMNs, the 5G DDNMF/PKMF of the source/target UE selects one PLMN and sends a monitor message (Monitor Request) to obtain the code receiving security parameter (Code-Rcv-SecParams). The code receiving security parameter is one of the aforementioned security parameter(s).

7. The 5G DDNMF/PKMF of the U2U relay exchanges authorization message(s) with the ProSe Application Server/PCF/UDM. The ProSe Application Server checks whether the source UE/target UE or UE-to-UE relay is authorized to perform U2U discovery under the specified U2U relay service, or checks whether the U2U relay is authorized to provide the U2U relay service for the source UE /target UE.

8. If U2U Relay is authorized and the PC5 UE security capability in step 4 includes the selected PC5 security algorithm, the 5G DDNMF/PKMF of the UE-to-UE relay responds to the 5G DDNMF/PKMF of the source UE/target UE with a Monitor Response message including the corresponding code receiving security parameter(s) and the selected PC5 security algorithm (based on the information/keys stored in step 3). The code receiving security parameter(s) provides(provide) the information required by the source UE/target UE to check the protection of the announcement message by the UE-to-UE relay. The RSC and the code receiving security parameter(s) are stored in the 5G DDNMF/PKMF of the source/target UE.

9. The 5G DDNMF/PKMF of the source UE/target UE returns the code receiving security parameter(s), as well as the CURRENT_TIME and the MAX_OFFSET and the selected PC5 security algorithm. The source UE/target UE stores the code receiving security parameter(s) (Code-Rcv-SecParams), the selected PC5 security algorithm and the RSC.

10. The U2U relay broadcasts a U2U relay discovery announcement message and protects it with corresponding code-sending security parameter(s). The U2U relay discovery announcement message may include the type of discovery (i.e., U2U relay), the RSC, and UE ID (i.e., the RPAUID(s) of other UE(s) in proximity). The UE ID included in the announcement message here is the ID(s) of discovered UE(s). For example, before the discovery between UEs this time, the relay UE has experienced multiple direct link communications based on the PC5 and/or SR5 interfaces, and the discovery stage before the direct link communication can discover other UE(s). The discovered UE(s) here may be one or more source UEs and/or target UEs that have been discovered before this discovery stage.

11. Based on the timing of a timer based on Universal Time Coordinated (UTC) associated with the discovery slot, if the received announcement message is within the time range corresponding to CURRENT-TIME and MAX_OFFSET, the source UE/target UE listens to and processes the discovery message of the U2U relay. After the integrity check of the announcement message is passed, the source UE/ target UE decides whether to use the U2U relay based on the RSC and the discovered UE ID. If the UE wants to communicate with other UE(s) through the U2U relay, the UE may initiate the U2U relay link establishment procedure.

It is worth noting that: the UE can check the integrity of the discovery message on its own or check the integrity of the discovery message through a match report.

As shown in FIG. 10, an embodiment of the present disclosure provides an information processing apparatus. The apparatus includes a first sending module 110 and a first receiving module 120.

The first sending module 110 is configured to send a request message to the network device. The request message at least includes: a Relay Service Code (RSC).

The first receiving module 120 is configured to receive a response message which is returned by the network device based on the request message. The first UE is authorized for a relay service authority indicated by the RSC, and the response message includes a security parameter for UE-to-UE relay discovery.

The information processing apparatus may be a first UE.

In some embodiments, the first sending module 110 and the first receiving module 120 may both be program modules. After the program modules are executed by a processor, the above operations can be implemented.

In some other embodiments, the first sending module 110 and the first receiving module 120 may both be a combination of software and hardware modules. The combination of the software and hardware modules includes but is not limited to a programmable array; the programmable array includes but is not limited to: field programmable array and /or complex programmable array.

In some other embodiments, the first sending module 110 and the first receiving module 120 may both be pure hardware modules; the pure hardware modules include but are not limited to: application specific integrated circuits.

In some embodiments, the first sending module 110 is configured to, if the first UE is a relay UE, send an announcement message after the security parameter is received.

In some embodiments, the announcement message includes the RSC, and the apparatus further includes:
a first connection module configured to establish a relay link with a second UE that supports the relay service corresponding to the RSC carried in the announcement message, wherein the second UE is the source UE and/or target UE of the UE-to-UE relay communication.

In some embodiments, the apparatus further includes:
a first monitoring module is configured to, if the first UE is the source UE or the target UE of the UE-to-UE relay communication, perform monitoring of the announcement message after the discovery parameter is received.

In some embodiments, the announcement message includes the RSC, and the apparatus further includes:
a first determination module configured to, if the first UE supports the relay service indicated by the RSC in the monitored announcement message, determine whether to establish a relay link with a second UE that sends the announcement message.

In some embodiments, the apparatus further includes:
a check module configured to perform security check on the announcement message using the security parameter after the announcement message is received;
the determination module is configured to, if the first UE supports the relay service indicated by the RSC in the monitored announcement message and the announcement message passes the security check, determine whether to establish a relay link with a second UE that sends the announcement message.

In some embodiments, the announcement message includes at least one of the following:
information of a type of discovery;
the RSC;
a restricted proximity service application user identity (RPAUID) of an optional source UE or an optional target UE used for a UE by which the announcement message is monitored to determine whether to establish a relay link with a relay UE that sends the announcement message.

In some embodiments, the first UE is a relay UE, and the request message further includes: an identity ID of the relay UE; or
the first UE is a source UE or a target UE, and the request message includes the ID of the first UE, or the request message includes the ID of the first UE and the ID of an optional relay UE.

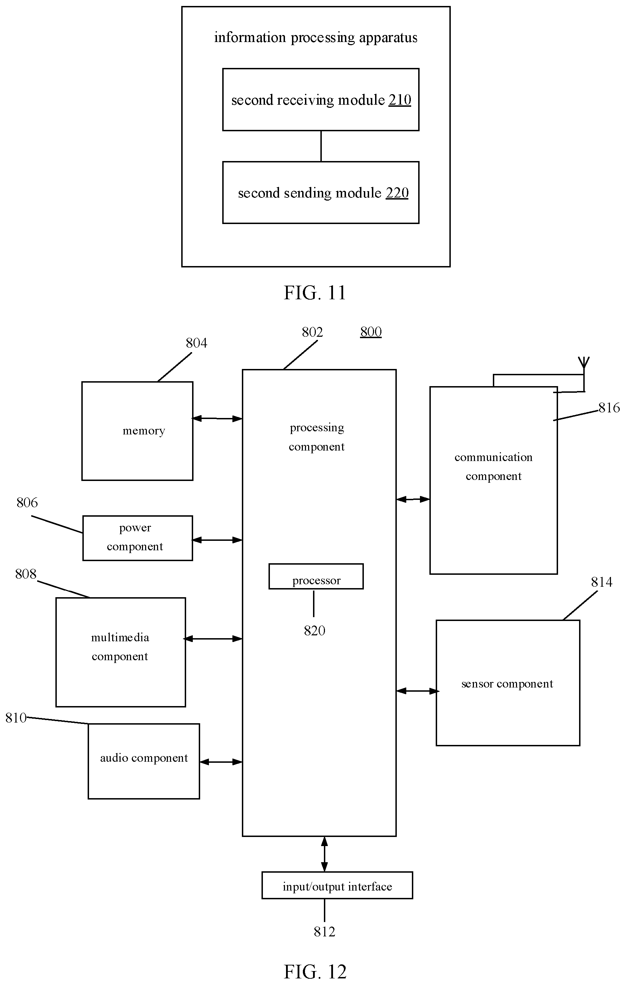

As shown in FIG. 11, an embodiment of the present disclosure provides an information processing apparatus, which is implemented in a network device. The apparatus includes a second receiving module 210 and a second sending module 220.

The second receiving module 210 is configured to receive a request message from a first UE. The request message at least includes a Relay Service Code (RSC).

The second sending module 220 is configured to send a response message to the first UE according to the RSC. The first UE is authorized for a relay service indicated by the RSC, and the response message includes a security parameter for UE-to-UE relay discovery.

The information processing apparatus may be a network device.

In some embodiments, the second sending module 220 and the second receiving module 210 may both be program modules. After the program modules are executed by a processor, the above operations can be implemented.

In some other embodiments, the second sending module 220 and the second receiving module 210 may both be a combination of software and hardware modules. The combination of software and hardware modules includes but is not limited to a programmable array; the programmable array includes but is not limited to: field programmable array and/or complex programmable array.

In some other embodiments, the second sending module 220 and the second receiving module 210 may both be pure hardware modules; the pure hardware modules include but are not limited to: application specific integrated circuits.

In some embodiments, the request message further includes: an identity (ID) of the first UE ;

The apparatus further includes:
a second determination module configured to determine whether the first UE is authorized for UE-to-UE relay communication according to the ID of the first UE;
the second sending module 220 is configured to send the response message to the first UE according to the RSC when the first UE is authorized for the UE-to-UE relay communication.

An embodiment of the present disclosure provides a communication device, including:
a memory storing instructions executable by a processor; and
the processor connected to the memory;
the processor is configured to perform the information processing method provided by any of the aforementioned technical solutions, and the information processing method may include an information processing method performed by the first UE or by the network device .

The processor may include various types of storage medium, and the storage medium is a non-transitory computer storage medium that can continue to memorize information stored thereon after the communication device is powered off.

Here, the communication device includes: a UE or a network device, and the network device may be a network device of any core network mentioned above.

The processor may be connected to the memory via a bus or the like, and is used to read an executable program stored in the memory, for example, at least one of the information processing methods shown in FIG. 2, FIG. 3A to FIG. 3B, and FIG. 4 to FIG. 9.

FIG. 12 is a block diagram of a UE 800 according to an example embodiment. For example, the UE 800 may be a mobile phone, a computer, digital broadcast user equipment, a messaging device, a gaming console, a tablet, a medical device, exercise equipment, a personal digital assistant, and the like.

Referring to FIG. 12, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 804 including instructions executable by the processor 820 in the UE 800, for performing the above-described methods. For example, the non-transitory computer-readable storage medium may be a ROM, a Random Access Memory (RAM), a CD-ROM, a magnetic tape, a floppy disc, an optical data storage device, and the like.

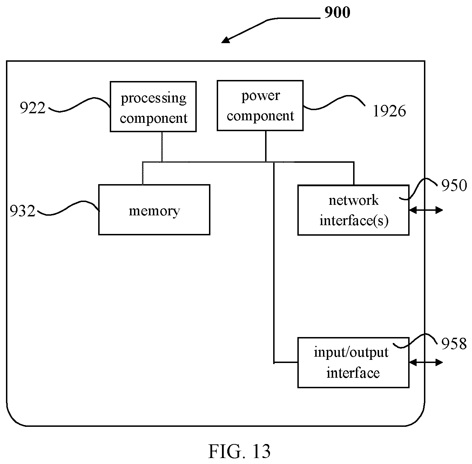

As shown in FIG. 13, an embodiment of the present disclosure shows a structure of a network device 900. The communication device may be a network device in the core network mentioned above.

Referring to FIG. 3, the network device 900 includes a processing component 922 that further includes one or more processors, and memory resources represented by a memory 932 for storing instructions executable by the processing component 922, such as application programs. The application programs stored in the memory 932 may include one or more modules each corresponding to a set of instructions. Further, the processing component 922 is configured to execute the instructions to perform any of the above described methods which are applied at the access device, for example, at least one of the information processing methods as shown in FIG. 2, FIG. 3A to FIG. 3B, and FIG. 4 to FIG. 9.

The network device 900 may also include a power component 926 configured to perform power management of the network device 900, wired or wireless network interface(s) 950 configured to connect the network device 900 to a network, and an input/output (I/O) interface 958. The network device 900 may operate based on an operating system stored in the memory 932, such as Windows Server^{™}, Mac OS X^{™}, Unix^{™}, Linux^{™}, FreeBSD^{™}, or the like.

An embodiment of the present disclosure provides a computer storage medium storing an executable program; after the executable program is executed by a processor, the information processing method provided by any of the aforementioned technical solutions is implemented, for example, at least one of the information processing methods shown in FIG. 2 , FIG. 3A to FIG. 3B , and FIG. 4 to FIG. 9.

The computer storage medium may be a non-transitory computer-readable storage medium, for example, a ROM, a Random Access Memory (RAM), a CD-ROM, a magnetic tape, a floppy disk, an optical data storage device , etc.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims..

## Claims

1. An information processing method, performed by a first UE, the method comprising:
sending a request message to a network device, wherein the request message at least comprises a Relay Service Code (RSC), and the RSC is used to identify a relay service; and
receiving a response message which is returned by the network device based on the request message, wherein the first UE is authorized for the relay service indicated by the RSC, and the response message comprises a security parameter for UE-to-UE relay discovery.

2. The method according to claim 1, wherein the first UE is a relay UE, and the relay UE is capable of establishing links with a source UE and a target UE respectively to implement a UE-to-UE relay communication between the source UE and the target UE as a relay;
wherein the method further comprises:
sending an announcement message after receiving the security parameter.

3. The method according to claim 2, wherein the announcement message comprises the RSC, and the method further comprises:
establishing a relay link with a second UE that supports the relay service corresponding to the RSC carried in the announcement message, wherein the second UE is the source UE and/or the target UE in the UE-to-UE relay communication.

4. The method according to claim 1, further comprising:
the first UE being a source UE or a target UE in a UE-to-UE relay communication, wherein the source UE and the target UE are respectively connected to a relay UE to implement the UE- to-UE relay communication through the relay UE;
wherein the method further comprises:
after receiving a discovery parameter, performing monitoring of an announcement message.

5. The method according to claim 4, wherein the announcement message comprises the RSC, and the method further comprises:
if the first UE supports the relay service indicated by the RSC in the monitored announcement message, determining whether to establish a relay link with a second UE that sends the announcement message.

6. The method according to claim 5, further comprising:
after receiving the announcement message, performing security check on the announcement message using the security parameter;
wherein determining whether to establish the relay link with the second UE that sends the announcement message if the first UE supports the relay service indicated by the RSC in the monitored announcement message comprises:
if the first UE supports the relay service indicated by the RSC in the monitored announcement message and the announcement message passes the security check, determining whether to establish the relay link with the second UE that sends the announcement message.

7. The method according to any one of claims 1 to 3, wherein the announcement message comprises at least one of:
information of a type of discovery;
the RSC;
an identity (ID) of an optional source UE or an optional target UE used for a UE by which the announcement message is monitored to determine whether to establish a relay link with a relay UE that sends the announcement message.

8. The method according to claim 1 or 2, wherein:
the first UE is a relay UE, and the request message further comprises: an identity (ID) of the relay UE; or
the first UE is a source UE or a target UE, and the request message comprises the ID of the first UE, or the request message comprises the ID of the first UE and an ID of an optional relay UE.

9. An information processing method, performed by a network device, the method comprising:
receiving a request message from a first UE, wherein the request message at least comprises a Relay Service Code (RSC), and the RSC is used to identify a relay service; and
sending a response message to the first UE according to the RSC, wherein the first UE is authorized for the relay service indicated by the RSC, and the response message comprises a security parameter for UE-to-UE relay discovery.

10. The method according to claim 9, wherein the request message further comprises: an identity (ID) of the first UE;
wherein the method further comprises:
determining, according to the ID of the first UE, whether the first UE is authorized for a UE-to-UE relay communication;
wherein sending the response message to the first UE according to the RSC comprises:
when the first UE is authorized for the UE-to-UE relay communication, sending the response message to the first UE according to the RSC.

11. An information processing apparatus, comprising:
a first sending module configured to send a request message to a network device, wherein the request message at least comprises a Relay Service Code (RSC); and
a first receiving module configured to receive a response message which is returned by the network device based on the request message, wherein the first UE is authorized for the relay service indicated by the RSC, and the response message comprises a security parameter for UE-to-UE relay discovery.

12. The apparatus according to claim 11, wherein the first sending module is configured to, if the first UE is a relay UE, send an announcement message after the security parameter is received.

13. The apparatus according to claim 12, wherein the announcement message comprises the RSC, and the apparatus further comprises:
a first connection module configured to establish a relay link with a second UE that supports the relay service corresponding to the RSC carried in the announcement message, wherein the second UE is the source UE and/or the target UE in a UE-to-UE relay communication.

14. The apparatus according to claim 11, further comprising:
a first monitoring module configured to, if the first UE is a source UE or a target UE in a UE-to-UE relay communication, monitor an announcement message after the discovery parameter is received.

15. The apparatus according to claim 14, wherein the announcement message comprises the RSC, and the apparatus further comprises:
a first determination module configured to, if the first UE supports the relay service indicated by the RSC in the monitored announcement message, determine whether to establish a relay link with a second UE that sends the announcement message.

16. The apparatus according to claim 15, further comprising:
a check module configured to perform security check on the announcement message using the security parameter after the announcement message is received;
wherein the determination module is configured to, if the first UE supports the relay service indicated by the RSC in the monitored announcement message and the announcement message passes the security check, determine whether to establish the relay link with the second UE that sends the announcement message.

17. The apparatus according to any one of claims 11 to 13, wherein the announcement message comprises at least one of:
information of a type of discovery;
the RSC; or
an identity (ID) of an optional source UE or an optional target UE used for a UE by which the announcement message is monitored to determine whether to establish a relay link with a relay UE that sends the announcement message.

18. The apparatus according to claim 11 or 12, wherein:
the first UE is a relay UE, and the request message further comprises a Restricted ProSe Application User ID (RPAUID) of the relay UE; or
the first UE is a source UE or a target UE, and the request message comprises the ID of the first UE, or the request message comprises the ID of the first UE and an ID of an optional relay UE.

19. An information processing apparatus, performed by a network device, the apparatus comprising:
a second receiving module configured to receive a request message from a first UE, wherein the request message at least comprises a Relay Service Code (RSC), and the RSC is used to identify a relay service; and
a second sending module configured to send a response message to the first UE according to the RSC, wherein the first UE is authorized for the relay service indicated by the RSC, and the response message comprises a security parameter for UE-to-UE relay discovery.

20. The apparatus according to claim 19, wherein the request message further comprises an identity (ID) of the first UE;
wherein the apparatus further comprises:
a second determination module configured to determine whether the first UE is authorized for a UE-to-UE relay communication according to the ID of the first UE;
wherein the second sending module is configured to, when the first UE is authorized for the UE-to-UE relay communication, send the response message to the first UE according to the RSC.

21. A communication device, comprising a processor, a transceiver, a memory, and an executable program stored in the memory and capable of being run by the processor, wherein when the executable program is run by the processor, the method according to any one of claims 1 to 8 or 9 to 10 is implemented.

22. A computer storage medium storing an executable program, wherein after the executable program is executed by a processor, the method according to any one of claims 1 to 8 or 9 to 10 can be implemented.
